# FASCICULE DE BREVET EUROPEEN

(11) **EP 0 527 932 B1**
(45) Date de publication et mention de la délivrance du brevet: **04.11.1998**
(21) Numéro de dépôt: 91910324.2
(22) Date de dépôt: 21.05.1991
(51) Int. Cl.: E21B 17/00, E21B 43/10, E21B 33/14, E21B 33/127

(54) **PREFORME ET PROCEDE POUR TUBER ET/OU CHEMISER UN VOLUME CYLINDRIQUE**
VORFORMMITTEL UND VERFAHREN ZUM VERROHREN UND/ODER AUSKLEIDEN EINES ZYLINDRISCHEN VOLUMENS
PREFORM DEVICE AND PROCESS FOR COATING AND/OR LINING A CYLINDRICAL VOLUME

(30) Priorité: 18.05.1990 FR 9006269; 22.10.1990 FR 9013053; 21.01.1991 FR 9100628
(43) Date de publication de la demande: 24.02.1993
(73) Titulaire: NOBILEAU, Philippe, F-06300 Nice (FR)
(72) Inventeur: NOBILEAU, Philippe, F-06300 Nice (FR)
(86) Numéro de dépôt international: FR9100407
(87) Numéro de publication internationale: WO9118180

(56) Documents cités:
- DE-A- 1 189 492
- OA-A- 1 586
- US-A- 1 641 035
- US-A- 3 130 787
- US-A- 3 203 483
- US-A- 3 419 080
- US-A- 3 493 045
- US-A- 3 719 230
- US-A- 3 865 188
- US-A- 4 349 204
- US-A- 4 714 117

## Description

L'invention est relative à des dispositifs et des procédés pour réaliser un tube in situ, à partir d'une préforme repliée, de manipulation et de mise en place plus aisée que des tronçons de tubes rigides.

La réalisation de tubes sur le lieu de leur utilisation est requise dans plusieurs applications. L'une d'elles est le tubage des forages, notamment pétroliers, une seconde est la réalisation de canalisations de grande longueur telle que les conduites sous-marines, une autre enfin consiste dans la restauration ou le chemisage des conduites et tubages enterrés.

Le but d'un forage, notamment d'un forage pétrolier d'exploration est d'établir un passage de communication entre la surface et un certain objectif dans le sous-sol. Pour la plupart des puits, le diamètre initial du forage est important, tandis que lorsque le puits est achevé, le passage final de communication est de petit diamètre : la plupart du temps inférieur à 6 pouces (152 mm). Le passage est alors de diamètre constant égal à ce petit diamètre final sur toute la hauteur du puits.

Pour réaliser cette communication, tout en contenant les pressions rencontrées, des tubages concentriques successifs de plus en plus longs sont descendus et suspendus à partir de la surface, puis cimentés en place. Etant donné que chaque tubage doit passer à l'intérieur du précédent, son diamètre extérieur doit être inférieur au diamètre intérieur du précédent et pour obtenir un diamètre final d'accès de 4 à 8 pouces (102 à 203 mm), on doit nécessairement démarrer avec un forage de gros diamètre, en l'occurrence 17-1/2 pouces (445 mm), et même 36 et 26 pouces (915 et 660 mm) pour les forages en mer.

Les procédés actuels nécessitent donc de forer initialement en gros diamètres afin de disposer d'un nombre suffisant de tubage pour réaliser le puits. Les conséquences directes de cette technique sont un temps de forage long et des quantités importantes de produits consommables (tubes d'acier, boues de forage, ciment d'étanchéité, etc...) . En outre, du fait des diamètres importants des premiers tubages, les épaisseurs sont limitées pour des raisons de poids. La capacité de ces premiers tubages à résister à de fortes pressions internes est donc limitée. Il est nécessaire de suspendre chaque tube intérieur suivant depuis la surface afin d'augmenter la capacité de la partie supérieure du tubage à résister aux fortes pressions régnant en fond de puits.

Outre la grande quantité de produits consommables, et le temps important que demandent ces opérations de forage et de tubage concentriques, les techniques actuelles présentent d'autres inconvénients. La cimentation est difficile à réaliser du fait de l'étroitesse de l'espace annulaire et des aléas des terrains traversés. Par ailleurs, la nature métallique du tubage est un obstacle aux différentes mesures, principalement électriques, à réaliser pour localiser les couches productrices dans le but futur de mettre en production le réservoir d'hydrocarbures.

Il existe donc un besoin de simplifier les opérations de forage et de tubage.

Par ailleurs, la mise en place de canalisations, notamment en milieu sous-marin, est une opération délicate et longue, du fait de la nécessité de réaliser la mise bout à bout, principalement par soudage, d'une pluralité de tronçons de tubes d'acier qui forment la canalisation, surtout si elle est d'un certain diamètre, et d'immerger progressivement cette canalisation à partir du bateau sur lequel elle est assemblée au fur et à mesure, sans la plier, ce qui engendre une tension de pose importante. Il existe ici aussi un besoin de faciliter la pose d'une telle canalisation, notamment si la profondeur d'eau est importante et/ou si elle est de diamètre important.

Enfin la restauration ou le chemisage des tubages ou des canalisations souterraines implique la mise en place d'une chemise intérieure dans la tubulure défectueuse (devenue poreuse ou déjointoyée à l'endroit des raccordements de tronçons), cette chemise devant pouvoir se substituer, au moins par endroits, à la canalisation elle-même qui, entièrement corrodée, peut avoir totalement disparu.

Les brevets US 3,493,045, 1,641,035, 4,349,204, 3,130,787 décrivent des garnitures d'étanchéité qui par remplissage deviennent cylindrique mais ces dispositifs offrent des diamètres extensibles en fonction de la pression ou du volume du fluide de remplissage qui ne peuvent convenir pour les besoins des applications ci-dessus décrites.

La présente invention entend répondre à ces besoins en permettant, pour son application au forage, de conserver un diamètre de forage réduit sur toute la longueur du puits et un diamètre réduit de tubage. Pour son application à la réalisation de canalisations sous-marines, elle permet une mise en place aplatie qui diminuera le rayon de courbure minimum à respecter pendant la pose avec comme conséquence la diminution de la tension de pose ; et pour son application à la réfection des canalisations défectueuses, la préforme a pour fonction de consolider cette canalisation et parfois même de s'y substituer. Ces résultats sont obtenus par la mise en oeuvre d'un matériau composite déformable et durcissable, d'un encombrement radial minimum avant durcissement et possédant une structure qui puisse être pliée dans son état d'encombrement minimal et être inextensible radialement avant même son durcissement pour pouvoir être mise en forme en l'absence de toute contention extérieure.

A cet effet, la présente invention a pour premier objet une préforme tubulaire radialement déformable entre un état replié dans le sens de la longueur et un état déplié sensiblement cylindrique, comprenant une enveloppe intérieure souple et étanche et, formée sur l'extérieur de cette enveloppe intérieure, une armature comprenant une pluralité de fibres, manches ou bandes s'étendant sur plus d'un tour et coopérant par contact avec les fibres, manches ou bandes adjacentes, de sorte que les fibres, manches ou bandes adjacentes peuvent glisser les unes par rapport aux autres dans tout état de la préforme autre que son état déplié où, sous une pression interne, elles sont mutuellement immobilisés par la friction née entre elles d'un effet de cabestan pour former in-situ l'armature d'un tronçon de tube rigide de diamètre inextensible.

Cette structure permet le "pliage" dans le sens de la longueur de la préforme, bien qu'elle comporte une paroi épaisse, sans pour autant développer dans cette paroi des contraintes de flexion inadmissibles ou bien sans avoir recours à des matériaux très élastiques qui, par nature, ne possèdent pas les caractéristiques mécaniques nécessaires à la réalisation d'un tube pouvant résister aux fortes pressions.

A titre indicatif, une paroi composite polymérisée, c'est-à-dire dans laquelle les fibres d'armature sont bloquées les unes par rapport aux autres dans une matrice rigide, ne peut atteindre élastiquement un rayon de courbure de moins de 20 millimètres que si son épaisseur est inférieure à 5/10ème de millimètres. Une paroi épaisse au sens de l'invention est donc une paroi dont l'épaisseur est supérieure à 5/10ème de millimètres car le plus petit rayon de courbure dont on aura besoin dans les applications de l'invention est de l'ordre de 20 millimètres.

Ce pliage n'est possible que parce que la structure filamentaire, qui forme l'armature du tube, comporte des éléments qui peuvent glisser les uns par rapport aux autres dans la matrice à l'état initial fluide. Il faut entendre par structure filamentaire une structure comportant des fils en matériau de synthèse, ou métalliques pour certaines applications, soit tissés, soit rassemblés en mèches enroulées pour former la paroi du tube, en une ou plusieurs couches, avec des angles de croisement déterminés. La principale caractéristique de cette structure réside dans la présence en nombre important de fils circonférentiels, de sorte que la structure est pratiquement inextensible dans le sens circonférentiel sous l'effet d'une pression intérieure déterminé et ceci par friction des fils circonférentiels entre eux (effet de cabestan) qui les bloque mutuellement.

Dans un premier mode de réalisation, la structure filamentaire est constituée par l'enroulement d'une pluralité de fibres longues imprégnés de résine durcissable, sur la première enveloppe supporté par un mandrin et revêtu de nappes de fibres longitudinales.

Dans un autre mode de réalisation, la structure filamentaire comporte une pluralité de manches concentriques, placées les unes dans les autres, chacune des manches ayant sous charge une dimension périphérique déterminée légèrement plus grande que la dimension de la manche qu'elle entoure ou légèrement plus petite que la dimension de la manche qui l'entoure, de façon à former une structure serrée.

Dans un autre mode de réalisation, destiné à des applications ou le poids minimum de la préforme est important, par exemple pour assurer la stabilité d'une canalisation sous-marine, l'enroulement filamentaire pourra avantageusement être constitué entièrement ou partiellement de fils métalliques de faible section (de l'ordre de 1/10 de mm).

De manière préférée, la préforme selon l'invention comporte également une enveloppe extérieure souple et étanche dont la mesure périphérique est égale à celle externe du tronçon de tube, l'armature étant confinée entre les deux enveloppes.

Chaque tronçon de préforme souple comprend un fond souple raccordé de manière étanche à une extrémité de la paroi tubulaire et, à l'opposé, un second fond souple traversée par un conduit de remplissage de la section tubulaire, relié à une source de fluide pour la faire passer dans un état cylindrique, à partir d'un état replié dans lequel son volume intérieur est isolé de l'extérieur ou bien même maintenu sous vide. La préforme ainsi complétée est prête pour subir une épreuve hydraulique en usine avant son stockage, repliée sous vide, sur touret de transport. Le vide maintenu à l'intérieur de la préforme rigidifie la préforme replié et conserve à cette dernière un volume constant, donc un poids relatif constant lors de l'immersion du tronçon dans un fluide, malgré les variations de pression hydrostatique du liquide extérieur.

Dans une variante de réalisation, la paroi de la préforme peut comporter, en sandwich entre deux pluralités d'enroulements filamentaires, une âme ou couche épaisse, résistant bien à la compression transversale, et suffisamment souple pour être également pliée, ceci afin d'augmenter l'inertie de la section tubulaire. Cette âme pourra, dans certain cas, être choisie en matériau de densité élevé pour alourdir le tronçon de préforme souple. On peut également prévoir une âme constituée par l'enroulement de feuilles minces imprégnées qui pourront glisser les unes par rapport aux autres afin de faciliter le pliage radial et qui ensuite seront bloquées en glissement lors du durcissement de la résine d'imprégnation.

La préforme, dans son état replié, a sa paroi aplatie sur elle-même, les bords longitudinaux formant un repli en épingle à cheveux, autour d'un volume rempli d'un matériau incompressible, à l'état pâteux à la température ambiante, limitant le rayon de courbure du pliage. Dans certains cas, ce matériau sera de densité élevée, grâce à des charges minérales pour augmenter la masse du tronçon et faciliter son immersion dans un milieu liquide. A la place de tout ou partie de ce matériau, des conduites tubulaires, dont le rôle sera expliqué ci-après, formeront des éléments limiteurs du rayon de courbure de la paroi de la préforme.

Selon la destination de la préforme : réalisation de canalisation, tubage d'un puits de forage, etc..., celle-ci se présentera, à l'état replié, soit sous forme d'une bande sensiblement plate, soit sous la forme d'un fer-à-cheval, les deux épingles à cheveux étant adjacentes l'une de l'autre. Dans cette dernière configuration, aucune dimension radiale de la préforme n'est supérieure au diamètre intérieur de la préforme dans son état déplié.

Avantageusement, l'espace intérieur de ce fer à cheval, constitue un logement pour un matériau à l'état plastique qui permet de réaliser un liant étanche entre la paroi du tube issu de la préforme dépliée et durcie et les terrains traversés, lorsque l'invention est utilisée au tubage d'un forage, notamment pétrolier.

Le tronçon de préforme et le matériau d'étanchéité sont contenus dans une enveloppe élastique, de dimension périphérique, au repos, sensiblement égale à la dimension périphérique extérieure de la préforme à l'état déplié.

Dans le cas où un diamètre intérieur unique de tubage est souhaitable en même temps qu'un recouvrement d'étanchéité de deux tronçons successifs, l'extrémité du tronçon de préforme opposée à celle traversée par le conduit de remplissage est, à l'état déplié, de diamètre intérieur égal au diamètre extérieur de son autre extrémité, sur des portions de longueur sensiblement égales.

De manière avantageuse, pour permettre le remplissage progressif du bas vers la haut du tubage, le conduit de remplissage se prolonge à l'intérieur du tronçon de préforme jusqu'au voisinage de la paroi de fond opposée. Plus précisément, ce conduit peux être divisé en deux dérivations s'étendant en parallèle l'une de l'autre dans chacun des volumes remplis du matériau incompressible susdit et constituées par les tubes susdits limiteurs de courbure, la paroi de ces tubes étant reliée au moins partiellement à la paroi de fond du tronçon de préforme de manière à constituer l'extracteur de ce fond après durcissement de la paroi de la préforme et de la pâte d'étanchéité.

Pour assurer la progressivité du remplissage du bas vers le haut, on disposera tout le long du tubage une pluralité de bandes qui céderont les unes après les autres à fur et à mesure du remplissage. On évite ainsi le risque d'un remplissage anarchique qui laisserait subsister entre deux parties gonflées au diamètre nominal, un étranglement mal rempli et donc non cylindrique.

L'invention a également pour objet des procédés basés sur la revendication 32, comme un procédé pour tuber un puits de forage à l'aide du dispositif précédent, qui comprend les étapes suivantes :
(a) forer une portion de puits à un diamètre sensiblement égal au diamètre extérieur du tubage,
(b) descendre la section de préforme souple repliée à l'intérieur du forage et/ou du tube précédemment installé, puis lorsque la quasi-totalité de la longueur de cette section de préforme souple repliée est logée au-delà de la partie inférieure du tubage précédemment installé, la remplir avec un fluide pour l'amener dans son état cylindrique en commençant par le bas,
(c) laisser opérer le durcissement de la matrice d'imprégnation de la structure filamentaire tendue par la pression interne de remplissage,
(d) remonter le conduit de remplissage.

Pour assurer une étanchéité entre deux tronçons successifs, le procédé de l'invention peut comprendre les étapes suivantes :
(a) forer une portion de puits à un diamètre sensiblement égal au diamètre extérieur du tubage,
(b) descendre la section de préforme souple dans son état replié dans le tube précédemment installé et arrêter la descente de la section de la préforme repliée de sorte que la portion supérieure de la préforme reste logée dans la portion du tube précédemment installé qui est de diamètre intérieur égal au diamètre extérieur de la partie supérieure de la préforme,
(c) remplir la préforme pour l'amener de son état replié à son état cylindrique en partant de son extrémité inférieure,
(d) laisser opérer le durcissement de la matrice d'imprégnation de la structure filamentaire tendue par la pression interne de remplissage,
(e) remonter le conduit de remplissage.

Dans une variante de réalisation la préforme selon l'invention, fermée à ses deux extrémités, possède dans son état replié un encombrement radial extérieur maximum inférieur à son diamètre intérieur atteint dans un second état déplié, et au moins une conduite de circulation qui s'étend axialement dans la préforme et qui traverse de manière étanche ses extrémités fermées, tandis qu'il existe un moyen de liaison du volume intérieur de la préforme à une source de fluide pour la faire passer par gonflage de son premier à son second état. La conduite de circulation sert à faire circuler un laitier de ciment dans l'espace annulaire existant entre le forage et la préforme descendue dans le trou, dépliée ou non. En effet, dans cette variante de réalisation, il n'existe pas de matériau d'étanchéité embarqué avec la préforme.

Le moyen de liaison de la préforme à la source de fluide de remplissage est, selon une première réalisation, constitué par un conduit séparé reliant le volume intérieur de la préforme à cette source.

Dans une autre réalisation, ce moyen de liaison est constitué par une dérivation de la conduite de circulation, raccordée à cette dernière par une chemise de dérivation connue situé au voisinage de la tête de la préforme. Dans les deux cas ces conduites de circulation et de gonflage sont, de manière avantageuse, constituées par les tubulures logées dans la préforme et servant de limiteur du rayon de courbure de la paroi.

Par ailleurs, la préforme peut comporter un diaphragme divisant son volume intérieur en deux volumes superposés, l'un d'eux étant de faible longueur par rapport à l'autre.

Le volume de plus grande longueur possède, à son extrémité opposée à l'autre volume, une portion de longueur au moins égale à celle de cet autre volume et de diamètre intérieur sensiblement égal au diamètre extérieur de cet autre volume lorsque ceux-ci sont dans leur second état.

Chacun des volumes est équipé de moyens indépendants de liaison à une source de fluide sous pression.

Le diaphragme est frangible au-delà d'un seuil de pression.

En outre, la dite conduite de circulation comporte un clapet de cimentation unidirectionnel interdisant le retour du fluide en direction de la source, ce clapet étant réalisé à base de matériaux forables et une zone de déconnexion située à l'intérieur de la section de tubage souple et proche de l'une de ses extrémités.

Il faut enfin noter que la circulation de ciment peut se faire alors que la préforme est encore à l'état replié. Dans ce cas on aura prévu de gonfler ou remplir la préforme et/ou chacun de ses compartiments par le bas, afin que le gonflage provoque la chasse du ciment vers le haut du forage, seule direction dans laquelle il peut être évacué.

L'invention concerne également un autre procédé pour tuber un puits de forage à l'aide du dispositif ci-dessus à circulation de ciment, qui comprend les étapes suivantes:
(a) forer une portion de puits à un diamètre sensiblement égal au diamètre extérieur du tubage,
(b) descendre la section de préforme souple dans son état replié dans le tube précédemment installé et arrêter la descente de la section de la préforme repliée de sorte que la portion supérieure de la préforme reste logée dans la portion du tube précédemment installé qui est de diamètre intérieur égal au diamètre extérieur de la partie supérieure de la préforme;
(c) faire circuler un laitier de ciment par la conduite de circulation, de façon que le liquide remonte dans l'espace annulaire entre la section de préforme repliée et la paroi du trou foré;
(d) remplir la section de préforme par le bas avec un fluide pour amener cette section de préforme dans son second état,
(e) laisser opérer la prise du laitier de ciment et le durcissement de la préforme pour sceller de manière étanche le tubage ainsi réalisé à la paroi du trou foré;
(f) détacher et remonter la conduite de circulation.

D'autres avantages et caractéristiques de l'invention ressortiront de la description qui va suivre d'un mode de mise en oeuvre de l'invention, donné à titre d'exemple non limitatif et représenté aux dessins annexés, dans lesquels :
- la figure 1A est une coupe schématique transversale d'un puits montrant une section de préforme à l'état replié, descendue dans une section de tube précédemment mise en place,
- la figure 1B est également une coupe schématique transversale de la préforme à l'état replié contenant une quantité plus importante de matériau plastique d'étanchéité.
- la figure 2 est une vue schématique d'une configuration aplatie de la préforme disposée en couches successives sur un touret,
- la figure 3A est une vue schématique en perspective de la structure, à l'état cylindrique, d'un mode de réalisation de la paroi d'un tronçon de tube selon l'invention,
- la figure 3B est une vue schématique en perspective de la structure, à l'état cylindrique, du même mode de réalisation de la paroi d'un tronçon de tube lorsque cette structure est appliquée fortement à l'intérieur d'un tube existant pour le chemiser,
- la figure 4 est une coupe schématique verticale de l'extrémité d'une section de tubage, après mise en place, dans laquelle est représentée, à l'état replié, une section de tubage en train d'être descendue,
- la figure 5 est une coupe schématique verticale d'une section de tubage à l'état cylindrique après remplissage.
- la figure 6 illustre par une coupe verticale, une seconde réalisation à tubages concentriques successifs d'un puits tubé selon l'invention après remplissage, et
- la figure 7 est la représentation du puits tubé de la figure 6, après mise en place de la préforme et du matériau d'étanchéité et retrait de l'embout de remplissage.
- la figure 8 est une coupe schématique verticale d'un puits montrant la préforme, selon la présente invention, remplie après avoir été descendu dans le puits en dessous du précédent tubage,
- la figure 9 est une coupe schématique transversale du puits montrant le dispositif replié longitudinalement sous vide avec une forme ovoïde en train d'être descendu à travers un tubage précédent cimenté,
- la figure 10 est une coupe schématique transversale du puits représenté à la figure 8;
- la figure 11 est une coupe schématique verticale d'un puits montrant la longueur de tubage avec deux volumes inégaux et séparés, le volume de plus faible longueur étant encore replié;
- la figure 12 est une coupe schématique verticale d'un puits selon la figure 11 avec le volume de plus faible longueur rempli.

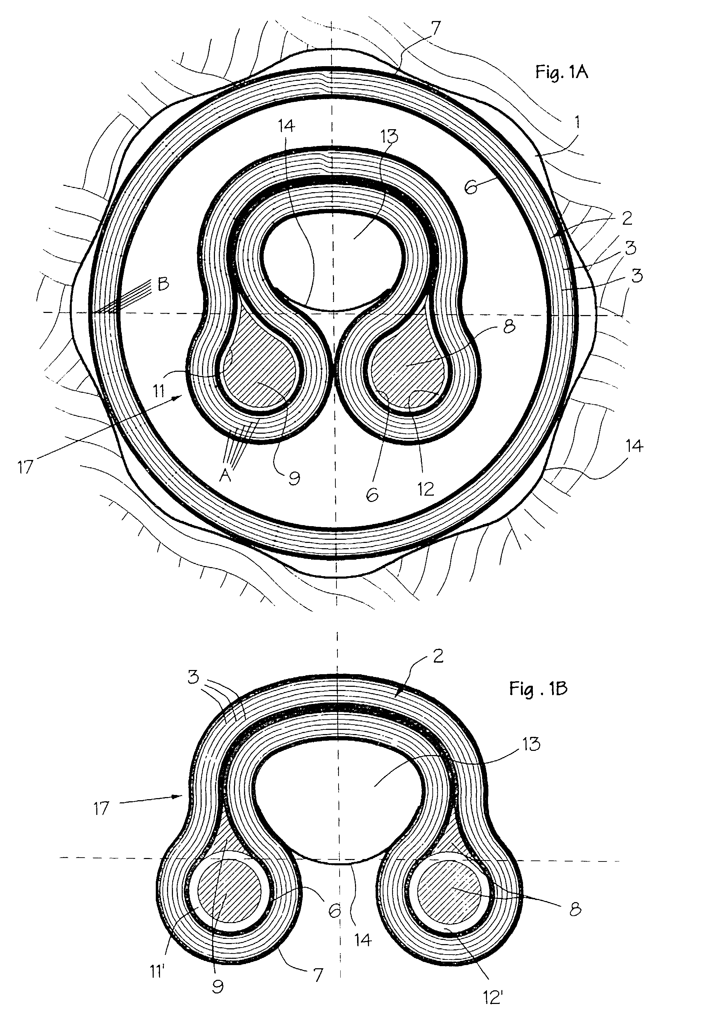

Aux figures 1A et 4 à 7, on a représenté un trou foré 1 gainé d'un tubage 2 conforme à l'invention, c'est-à-dire formé d'un matériau composite devenu rigide par durcissement de la matrice d'imprégnation de la structure filamentaire, soit par polymérisation ou par durcissement sous l'effet de la chaleur du puits ou par la circulation d'un fluide chaud, soit enfin par mise en contact d'un durcisseur avec la résine d'imprégnation.

La paroi de ce tubage est épaisse au sens où, selon l'invention, elle ne pourrait pas accepter élastiquement, à l'état polymérisé, un rayon de courbure inférieur à 40 millimètres.

La structure filamentaire de cette paroi est de ce fait très particulière. Elle possède en effet, confinées entre deux couches de peau interne et externe, une pluralité de fibres dont l'orientation principale est circonférentielle (ou périphérique) afin de bien résister à une pression interne élevée, ces fibres pouvant glisser les unes par rapport aux autres également dans le sens circonférentiel, de manière que cette paroi épaisse puisse être pliée en évitant que des contraintes inadmissibles de traction ou de flexion soient engendrées dans certaines fibres de la paroi, ce qui serait le cas si elles étaient immobilisées en glissement longitudinal les unes par rapport aux autres.

Il faut également que ces fibres soient bloquées les unes par rapport aux autres pour que la structure soit radialement inextensible sous l'effet d'une pression interne, lorsque elle a atteint sa dimension à l'état déplié. Ce caractère inextensible doit être obtenu avant tout durcissement de la résine qui n'est prévue que pour figer la structure dans son état déplié, sans participer à la résistance aux pressions internes. Son rôle est essentiellement d'empêcher le flambement de la structure sous l'effet d'une pression externe, sa résistance en cisaillement, empêchant tout glissement des fibres les unes par rapport aux autres, étant satisfaisante. Le blocage des fibres entre elles est réalisé par la friction développée entre chaque fibre et les fibres adjacentes, le long d'une ligne de contact suffisamment longue pour qu'il se produise un effet de cabestan. Cet effet existera si chacune des fibres principalement orientées circonférentiellement forme au moins un tour et de préférence plusieurs tours.

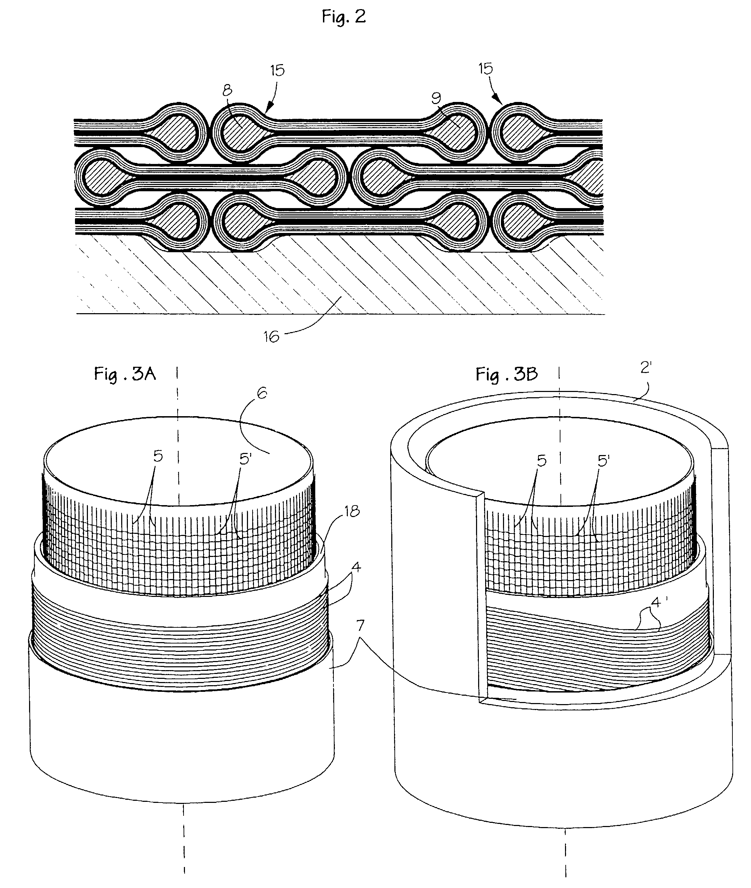

Il existe plusieurs possibilités pour réaliser une structure filamentaire qui possède ces caractéristiques. L'une d'elles, illustrée sur la figure 3A, consiste à enrouler sur un mandrin, préalablement revêtu d'une enveloppe souple et étanche 6, des mèches de fibres longues 4, préimprégnées de résine, sur l'épaisseur considérée définie par la différence de diamètre entre l'enveloppe intérieure 6 et une enveloppe extérieure souple et étanche 7 qui recouvre l'enroulement ainsi réalisé et lui garde son uniformité dimensionnelle (épaisseur) tout au long de la structure. De manière préférée, on aura prévu de mettre en place, entre l'enveloppe intérieure 6 et l'enroulement 4, une nappe de fibres longitudinales 5 tramés par des filaments 5' pour supporter les contraintes longitudinales dans la préforme, résultant de son poids et de la pression s'exerçant sur les fonds. Si un poids minimum de la préforme est requis, pour par exemple s'enfoncer dans une boue de densité élevée, on remplacera tout ou partie des fibres de synthèse par des fils d'acier.

Une seconde possibilité consiste à réaliser l'armature filamentaire à partir d'une bande de matériau, par enroulement hélicoïdal sur un mandrin, de manière à produire l'armature en continu. Cette bande est remarquable en ce qu'elle présente un bord longitudinal de longueur plus importante que l'autre. On peut ainsi obtenir une paroi multicouche, chaque couche s'étendant de la surface intérieure de l'armature à la surface extérieure de celle-ci.

Dans un autre mode de réalisation, La paroi de ce tubage est constituée d'une pluralité de manches 3. On peut prévoir plusieurs modes de réalisation de ces manches. Par exemple, chacune de ces manches comporte essentiellement des enroulements filamentaires circonférentiels 4 tramés par des filaments longitudinaux 5 comme cela est représenté à la figure 3. On peut également prévoir de tisser ces manches de manière classique, ou de les réaliser par superposition adhésive de plusieures nappes de fils ayant des orientations sur l'axe longitudinal de la préforme appropriées. On peut également envisager un tressage de ces nappes ou leur tissage en gaine tubulaire. Le fil, par exemple, de la fibre de verre ou des fils métalliques, et la méthode de confection seront choisis pour que les manches 3 soient pratiquement inextensibles, par exemple sous l'effet d'une pression interne. La paroi compte une pluralité de manches enfilées les unes dans les autres, chaque manche ayant une dimension périphérique légèrement supérieure et/ou légèrement inférieure de celle de chaque manche adjacente.

L'ensemble de ces manches est logé entre une enveloppe interne 6 et une enveloppe externe 7 souples et étanches qui définissent l'épaisseur de la paroi du tube.

Dans ces enveloppes, les manches filamentaires sont imprégnées d'une matrice du genre résine polymérisable ou thermodurcissable de manières connues, de sorte que, à la température ambiante, elle soit fluide pour qu'on puisse plier la paroi de la préforme de manière à obtenir un de ses états repliés représentés au centre de la figure 1A, à la figure 1B et à la figure 2. Au cours de ce pliage et de tout dépliage ultérieur, les manches peuvent glisser périphériquement les unes par rapport aux autres du fait de la nature encore fluide de la résine qui les imprègne.

On peut procéder à au moins deux types de pliage: celui 17 en fer-à-cheval représenté aux figures 1A et 1B, et celui à plat 15 représenté à la figure 2. Dans le cas des figures 1A et 1B, le pliage est spécifique d'une application de tubage, dans laquelle les dimensions radiales de la préforme pliée sont inférieures à son diamètre intérieur à l'état déplié. Le pliage 15 à plat de la figure 2 concerne une préforme pour canalisation, enroulée, telle que représentée, sur un touret 16 qui offre une résistance minimum à la courbure dans la direction de la faible épaisseur du plat.

Deux limiteurs de rayon de courbure ou conformateurs 8 et 9 sont logés à l'intérieur du tube, aux endroits où la paroi du tube est repliée sur elle-même en épingle à cheveux. Le rôle de ces conformateurs est de limiter les rayons de courbure aux endroits ou la paroi de la préforme est repliée sur elle-même. Le matériau employé pour ces conformateurs sera du type pâteux à température ordinaire. Dans un mode préféré de réalisation, chaque conformateur est enfermé dans une gaine souple 11, 12 dont on explicitera la fonction au moment du remplissage (figure 1A) ou est constitué par les conduites tubulaires 11' et 12' (figure 1B) remplies ou non de matériau pâteux, qui sert également de lest. Le matériau utilisé deviendra fluide sous l'effet d'une augmentation de température de sorte qu'il puisse être évacué par circulation fluide en même temps que la circulation créée dans la préforme lors de son remplissage ou, le cas échéant, lors de la circulation du ciment.

Pendant l'aplatissement et le pliage de la préforme, l'air se trouvant dans son volume intérieur est chassé; le vide ainsi créé constitue le moyen de maintien de la paroi dans son état replié. Les points repérés A et B sur la figure 1A illustrent le glissement des manches les unes par rapport aux autres lorsque le tube passe de son état plié à son état cylindrique.

Dans le cas des figures lA et 1B, la préforme, en même temps qu'aplatie, est courbée pour que les deux extrémités en épingle à cheveux soient plus ou moins proches l'une de l'autre, de sorte que l'on définit entre les branches du fer-à-cheval un volume plus ou moins important. A l'intérieur des branches du fer-à-cheval, on a placé une sorte de boudin 13 de matériau à l'état pâteux qui permettra de réaliser un liant étanche entre la paroi extérieure du tube et les terrains traversées. Ce matériau sera également du type polymérisable ou thermodurcissable tout en étant plastique à la température ordinaire et fluide à une température plus élevée (celle du puits ou celle du fluide de remplissage du tubage) au moment de la mise à l'état cylindrique de la préforme. On peut également prévoir un matériau qui conserve dans son état final une certaine élasticité résiduelle grâce à laquelle le joint entre tube et terrains est amélioré.

La paroi du tube selon l'invention comprend enfin une peau extérieure 14 extensible. Cette peau enveloppe le tube à l'état replié et le matériau d'étanchéité logé entre les branches du fer-à-cheval et sa dimension périphérique est sensiblement égale à celle extérieure du tube. A l'état cylindrique de la préforme, la peau 14 épouse le contour des terrains, comme on le voit sur la figure 1, et le matériau d'étanchéité 13 remplit complètement le volume résiduel entre la surface extérieure du tube et le trou foré dans les terrains.

Aux figures 3A et 3B, en plus des éléments décrits antérieurement, on a représenté une âme 18 dans la paroi de tube, qui est soit une feuille souple résistant bien à la compression transversale pour augmenter l'inertie de la paroi, soit, pour alourdir le tube tout en préservant la facilité de son pliage, une structure laminaire de feuilles minces enroulées l'une sur l'autre et imprégnées de résine.

On a amplement expliqué ci-dessus que l'une des caractéristiques de l'invention résulte de l'effet de cabestan qui naît de la friction entre les fibres à orientation circonférentielle lors du gonflage de la préforme. Dans l'application de l'invention au chemisage d'une tubulure existante, avec pour objectif de se substituer à cette tubulure aux endroits où elle viendrait à manquer, le gonflage de la préforme doit plaquer cette dernière sur la tubulure existante avant que cet effet de cabestan puisse intervenir. Dans ce cas, les fibres circonférentielles, soumises à la retenue externe du tube 2' à chemiser et à la forte pression interne de gonflage, tendent à légèrement onduler comme en 4' sur la figure 3B, dans le sens longitudinal de la préforme, ce qui se traduit par une légère augmentation de l'épaisseur de la préforme. La chemise est donc un peu plus épaisse dans les zones où elle s'applique sur un tube que dans les zones où elle s'y substitue. On voit donc que la structure épaisse de l'invention se prête parfaitement à la réfection des tubes, mieux que les dispositifs exclusivement prévus pour le chemisage interne qui ne sauraient se substituer aux parties manquantes du tube. Enfin la possibilité des fibres circonférentielles à absorber en ondulant leur surlongueur par rapport à un diamètre inférieur à celui de la préforme après gonflage, permet à cette dernière de convenir malgré la dispersion des dimensions des tubes à réparer due à leur larges tolérances de fabrication.

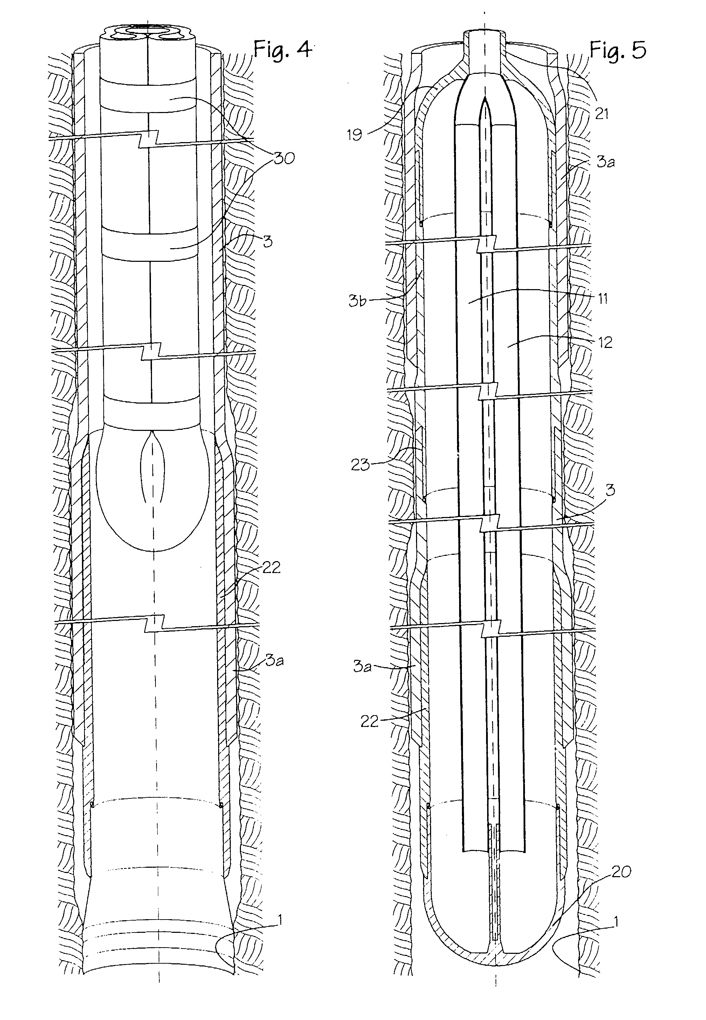

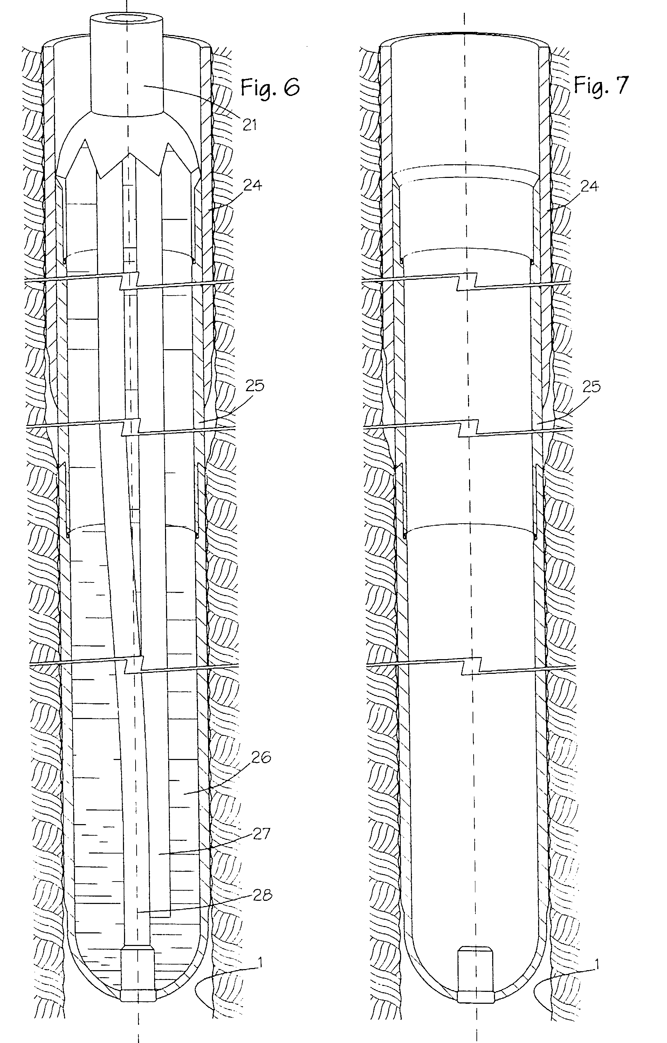

La figure 4 est la représentation d'une section de préforme tubulaire replié selon l'invention, qui est descendue dans le trou 1 foré. Des bandes 30 sont disposées sur la longueur de la préforme repliée. Le remplissage du bas vers le haut de la préforme est ainsi assuré car l'arrivée du fluide est réalisée à l'extrémité inférieure de la préforme et ce remplissage rompt au fur et à mesure les bandes 30 dont la résistance à la rupture a été calculée à cet effet. Sur la figure 5, la section est maintenu dans son état cylindrique et comprend, en plus de la paroi 3, deux parois d'extrémité 19 et 20 qui ferment le volume intérieur de cette section tubulaire. La paroi d'extrémité supérieure 19 est raccordée à la paroi par un moyen connu, tel que notamment décrit par la demande de brevet français n° 90-08474 du 4 Juillet 1990 et est traversée de manière étanche par un conduit 21, par lequel un fluide de remplissage peut être introduit dans la section tubulaire. Ce conduit 21 est raccordé aux deux tubulures 11 et 12 qui contiennent le matériau 8 et 9 limiteur de rayon de courbure.

La paroi d'extrémité inférieure 20 est reliée à la paroi tubulaire 3 par l'intermédiaire d'un manchon de protection 22 et est également rendue solidaire des portions inférieures des tubulures 11 et 12 afin de faciliter sa récupération.

On remarque en effet sur la figure 5 que l'extrémité inférieure 3a de la paroi 3 est de diamètres intérieur et extérieur légèrement plus importants que sur le reste de sa longueur. En outre, l'extrémité supérieure 3b est d'épaisseur légèrement inférieure à celle de la section courante de la paroi pour que son diamètre extérieur soit égal au diamètre intérieur de l'extrémité inférieure 3a de la section de tube précédente et son diamètre intérieur égal au diamètre intérieur de la section courante. Les sections successives peuvent ainsi se chevaucher, l'extrémité supérieure de l'une venant s'appuyer au remplissage sur la surface intérieure de l'extrémité inférieure de celle qui a été mise en place avant et qui est rigide. Bien entendu, le forage destiné à recevoir un tel tubage, comportera une partie d'extrémité forée à l'élargisseur pour permettre l'expansion de la partie élargie du tubage lors du remplissage de ce dernier.

Le manchon 22 décrit ci-dessus est destiné à protéger cette surface de contact inférieure, lors de la poursuite du forage après tubage d'une section précédente, contre l'abrasion et les chocs des outils de forage (voir figure 5). Ce manchon est pelable, c'est-à-dire qu'il ne sera pas durci comme la paroi 3 et, gardant un certaine souplesse, pourra être saisi par son extrémité inférieure et retroussé à l'intérieur du tube 3, avant la descente de la section de tubage suivante.

La figure 5 fait apparaître qu'une section de tubage est en fait réalisée à partir de plusieurs tronçons mis bout à bout au moyen d'un joint 23. Cette réalisation permet d'ajuster la longueur de tubage à celle nécessaire sur le site et facilite la fabrication et les épreuves hydrauliques des sections de tubage.

On notera également qu'il est possible d'ajuster la quantité de matériau d'étanchéité en fonction notamment de la nature des terrains traversés, en ajustant la section du boudin mis en place dans le creux de la préforme repliée (du roc, foré au diamètre extérieur du tubage, ne demandera que peu de matériau d'étanchéité, alors que des terrains plus tendres et plus mous, sujet à l'érosion lors du forage en demanderont d'avantage).

Le tubage d'une section de puits forée s'opère donc en descendant une longueur de tubage à l'état replié dans le trou. Ainsi placé, sous l'effet de la chaleur due à la température des terrains ou par la circulation d'un fluide chaud, on provoque la fluidification du matériau 8 et 9 des limiteurs de rayon de courbure. Ce matériau peut alors être refoulé à l'intérieur du tube sous l'effet d'un fluide introduit par le conduit 21. Le tubage commence donc à se remplir et à passer à l'état cylindrique. Le boudin 13 de matériau d'étanchéité est comprimé entre la paroi 3 et le trou 1 et se trouve repoussé circonférentiellement pour remplir les interstices entre le trou foré dans les terrains et la paroi extérieure du tubage. Le tubage est ainsi progressivement plaqué contre la paroi interne du forage et ceci du bas vers le haut, et son extrémité supérieure, contre la surface interne de la section de tubage précédente. L'excédent de matériau d'étanchéité, s'il y en a, est refoulé dans le tubage précédent. On procède, alors, au durcissement de la paroi 3, par exemple en faisant circuler un fluide chaud à la température convenable (ou on attend que ce durcissement intervienne avec le temps grâce à la température de fond ou bien encore par d'autres moyens connus) puis on retire le fond supérieur 19, les tubulures 11 et 12 et le fond inférieur en tirant sur le conduit 21. Le manchon de protection 22 reste en place. On peut alors forer la section de puits suivante.

Aux figures 6 et 7, on a représenté une alternative de réalisation de l'invention. Au lieu de réaliser, comme dans les exemples précédents, un tubage avec un tube de diamètre unique, ce qui oblige à procéder à des opérations de forage avec élargisseur de deux diamètres différents pour loger les zones de raccordement, on procède, comme pour les opérations de tubage traditionnelles avec des casings acier, aux forages successifs de différents diamètres, sans élargissage, que l'on tube avec des tubages également de différents diamètres (par exemple les tubes 24 et 25 des figures 6 et 7). Dans ce cas on peut, par exemple, remplacer, à diamètre final égal de 7"( 178 mm), un programme de tubage acier de 20", 13-3/8", 9-5/8", 7" (510 mm, 340 mm, 245 mm, 178 mm) par un programme de tubage selon l'invention de 10", 9", 8" et 7" (255 mm, 229 mm, 203 mm et 178 mm), l'épaisseur de chaque tube étant d'un demi-pouce. En effet, grâce à l'invention, il n'est plus nécessaire de ménager un espace annulaire pour la circulation de la cimentation de ce tubage. Le casing pouvant être descendu replié peut avoir un diamètre extérieur égal au diamètre intérieur du casing précédent. Ceci permet de supprimer les zones élargies. En outre, la longueur du tubage et la position de mise en place ne sont plus aussi critiques puisque que la longueur de recouvrement est libre.

La figure 6 montre que chaque section de tubage 25, pour chaque diamètre, est de ce fait notablement simplifiée. Pour assurer son remplissage et son passage à l'état cylindrique du bas vers le haut, on introduira un liquide 26 de densité supérieure au liquide remplissant le puits par l'intermédiaire du stinger 27 qui agit comme un des limiteurs de courbure. L'autre limiteur de courbure est réalisé par la conduite 28 qui permet la circulation du puits.

La figure 7 illustre la section de tubage pendant la phase de test au sabot final après avoir enlevé la paroi d'extrémité supérieure et le tube 21 et ceci après durcissement de la paroi.

La préforme selon l'invention peut être également utilisée pour confectionner un autre dispositif de tubage d'un puits foré, légèrement différent de celui décrit ci-dessus et mis en oeuvre par un procédé également différent.

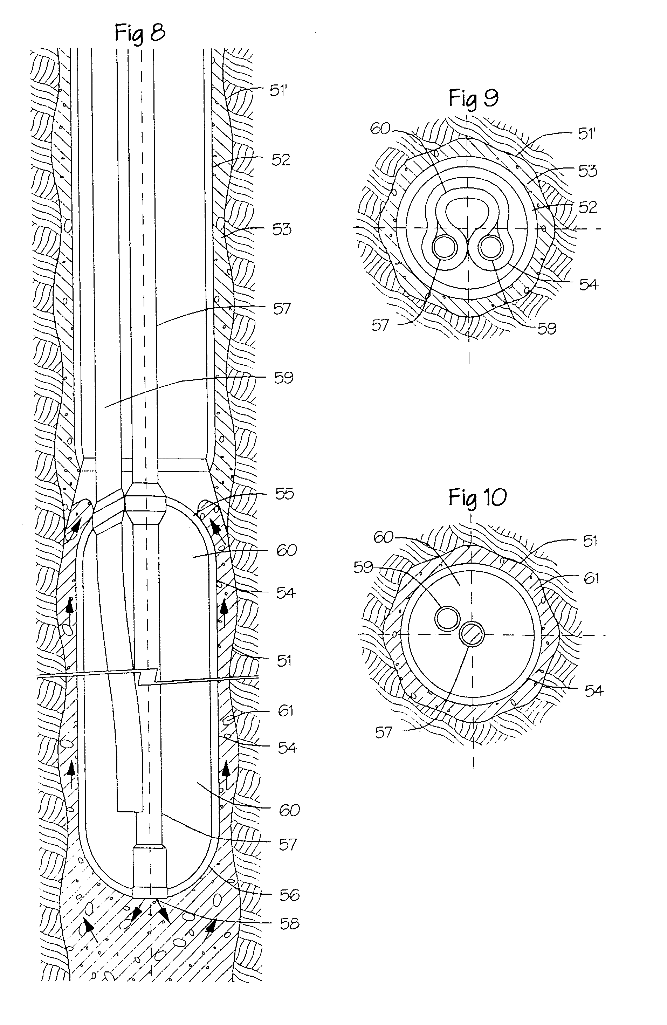

Sur la figure 8 un trou 51 est foré à travers le tubage précédent 52, cimenté au précédent trou foré 51' par le ciment 53. Le tubage précédent 52 peut être soit un tubage en acier conventionnel si c'est le premier tubage, ou bien un tubage selon l'invention. Le tubage en acier est constitué par des tronçons tubulaires de douze mètres environ, de diamètre constant, assemblés par des connecteurs vissés pour former un tubage de la longueur désirée. La section de tubage 54, conforme à l'invention, est fermée à son extrémité supérieure ou de tête 55 et inférieure ou de fond 56 et sera descendue dans le puits autour d'une conduite de cimentation 57 qui comporte une extrémité inférieure ouverte 58 au travers du fond de tubage 56. Une conduite de gonflage 59 est reliée à la tête 55 de la dite longueur de tubage 54.

Dans une variante de réalisation non représentée, la canalisation de gonflage est réduite à une dérivation de la conduite de circulation. Cette dérivation sera de préférence raccordée à la conduite de circulation dans sa partie intérieure à la section de tubage 54 ou au voisinage immédiat (extérieur) de la tête de la section de tubage, au moyen d'une chemise de dérivation ouvrant la dérivation en obturant simultanément la conduite de circulation ou fermant cette dérivation en maintenant ouverte la conduite 57. La connexion de la conduite 57 sera en conséquence sélectivement réalisée à une source de liquide de gonflage et à une source de fluide de scellement selon que l'on veut gonfler le tubage ou cimenter.

Sur la figure 9, la section de tubage 54 est représentée dans un premier état, son volume intérieur 60 étant sous vide, de façon que la dimension radiale de cette section de tubage 54 soit inférieure au diamètre intérieur du tubage précédent 52, c'est-à-dire au diamètre intérieur du tubage 54 selon l'invention, dans son second état d'encombrement radial maximum, lorsque le volume intérieur 60 est rempli. Lorsque la section de tubage 54 atteint sa position de mise en place (l'extrémité supérieure 55 étant située sous l'extrémité inférieure du tubage précédent 52), le volume 60 est gonflé par remplissage par la canalisation de gonflage 59, connectée à une source de liquide sous pression non représentée.

La figure 10 représente la section de tubage 54, vue en coupe, dans son second état, c'est-à-dire gonflée. Son diamètre extérieur est plus grand que le diamètre intérieur du tubage précédent 52. A ce moment-là, un laitier de ciment est injecté à travers la conduite de circulation 57 et rempli l'espace annulaire 61 entre le tubage et le trou foré.

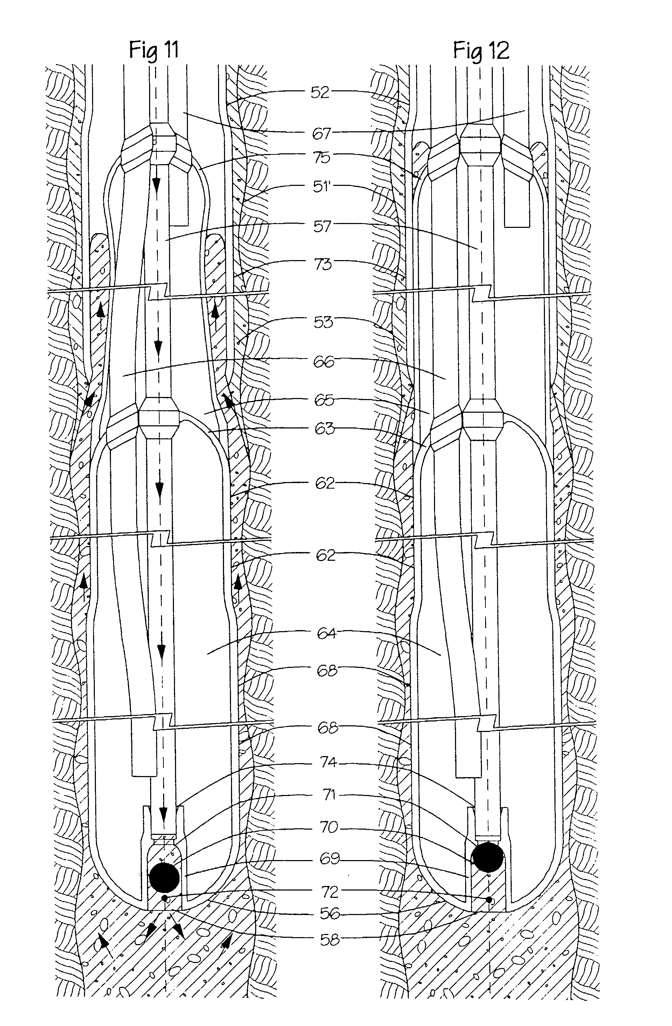

Aux figures 11 et 12, il est représenté une variante avantageuse de réalisation de l'invention dans laquelle la section de tubage comporte un diaphragme interne 63 divisant le volume intérieur en deux volumes: un volume principal inférieur 64 de grande longueur et un volume réduit supérieur 65 de petite longueur. Les deux volumes ont des canalisations de gonflage indépendantes 66 et 67. La portion inférieure 18 de la paroi de la section de tubage délimitant le volume 14 est de diamètre plus important que le reste de cette paroi, sur une longueur sensiblement identique à la hauteur du volume 65 de plus faible longueur. L'extrémité inférieure ouverte 58 de la conduite de cimentation 57, comporte un clapet unidirectionnel 69 comprenant une bille 70 reposant sur un siège situé à la partie supérieure du corps du clapet 71 et retenue par une barre transversale 72, tous les composants 56, 69, 70, 71 et 72 étant en matériau forable. Juste au dessus du clapet 69, la conduite de cimentation 57 comporte une zone affaiblie 74 pour faciliter sa rupture par traction, après la prise du ciment.

La figure 11 illustre le tubage pendant la cimentation. Seul le volume principal 64 de grande longueur de tubage est rempli (dans son second état). La figure 12 illustre le tubage après achèvement de la phase de cimentation, avant la prise du ciment, le volume réduit 65 étant alors rempli et mis en pression pour s'appliquer fortement sur la partie inférieure élargie 73 du tubage précédent 52 (qui correspond à la portion 68 du tubage 54 selon l'invention).

Pour la mise en oeuvre du dispositif selon l'invention, les sections de tubage 54 sont stockées, dans leur premier état, repliées sous vide autour de la conduite 57 de cimentation, sur une bobine. Pour éviter des rayons de courbure trop petits, de la baryte ou équivalent sera introduite dans le tubage lors de sa mise sous vide. Cette baryte aura également pour fonction d'alourdir le tubage replié pour combattre la poussée d'Archimède lorsqu'il sera descendu dans la boue du puits. Le puits est préparé pour être tubé et le tubage souple, replié, est descendu à travers le tubage 52 précédemment cimenté.

Dans le cas de la figure 8, la section de tubage 54 est entièrement placée sous le tubage précédent 52.

Dans le cas des figures 11 et 12, la descente de la section de tubage souple est arrêtée lorsque le volume supérieur de plus faible longueur 65 est situé au niveau de la portion inférieure élargie 68 ou 73 du tubage précédent. Pour obtenir cet arrangement, il faut, bien entendu avoir pris la précaution d'introduire le tubage de sorte que le volume 65 soit en partie supérieure. On procède ensuite au remplissage du volume principal 64 qui passe ainsi de son premier état replié à son second état, gonflé, dans lequel il prend une configuration cylindrique rigide, et ceci avec de la boue d'une densité identique à la boue du puits pour éviter le flottage de la section de tubage. Ensuite un laitier de ciment est refoulé dans la conduite 57 pour remonter dans l'espace annulaire 61 entre le puits et l'extérieur du tubage. Lorsque le laitier arrive dans l'espace annulaire entre les deux tubages 52 et 65, on procède au remplissage et à la mise en pression avec de la boue du volume de faible longueur 65. La paroi de ce volume est ainsi fortement appliquée sur la surface intérieure de l'extrémité inférieure du précédent tubage, réalisant ainsi une étanchéité autoclave. Lorsque le ciment est pris, on retire la conduite 57 par traction en provoquant sa rupture au niveau de la zone 74 et en augmentant la pression de gonflage des volumes 64 et 65 pour rompre les parties les plus faibles de leur paroi, c'est-à-dire les extrémités 55, 75 et le diaphragme 63. On peut alors reprendre le forage avec un outil de même diamètre

On donnera ci-après un exemple de réalisation chiffré de l'invention. C'est ainsi que l'on peut commencer de forer directement au diamètre de 8,5 pouces (216 mm) pour un passage final d'environ 6 pouces (152 mm). La section de tubage aura un diamètre extérieur rempli de 7 pouces (178 mm), mais replié longitudinalement sous vide sa section radiale sera de forme ovoïde avec une largeur approximative de 5 pouces 3/8 (136 mm) dans un sens et 4 pouces 1/4 (108 mm) dans l'autre sens. La section de tubage comprendra une conduite de cimentation interne de 2 pouces (51 mm) de diamètre en ligne flexible de haute pression qui résistera à la pression extérieure de remplissage du tubage. L'ensemble de la section de tubage pourra alors être stockée par enroulement sur une bobine. par exemple une bobine de 4,20 mètres de diamètre et 2,50 mètres de largeur pourrait contenir une section de tubage de 7 pouces d'une longueur pouvant atteindre 1 800 mètres.

La description ci-dessus concerne essentiellement l'application de l'invention au tubage des forages pétroliers. Il peut être avantageux, dans cette application comme dans celle relative à la réfection des canalisations, de supprimer l'enveloppe extérieure de la préforme. Il est en effet possible de prévoir une résine d'imprégnation qui puisse donner suffisamment de cohérence à l'armature filamentaire pour que la peau extérieure soit devenue inutile.

## Revendications

1. Préforme tubulaire radialement déformable entre un état replié dans le sens de la longueur et un état déplié sensiblement cylindrique comprenant une enveloppe intérieure souple (6) et étanche et, formée sur l'extérieur de cette enveloppe intérieure, une armature, caractérisé en ce que ladite armature comprend une pluralité de fibres, manches ou bandes (3,4) s'étendant sur plus d'un tour et coopérant par contact avec les fibres, manches ou bandes adjacentes, les fibres, manches ou bandes adjacentes pouvant ainsi glisser les unes par rapport aux autres dans tout état de la préforme autre que son état déplié où, sous une pression interne, elles sont mutuellement immobilisées par la friction née entre elles d'un effet de cabestan pour former in-situ l'armature d'un tronçon de tube rigide de diamètre inextensible.

2. Préforme selon la revendication 1, caractérisée en ce que l'armature comprend des fibres ou bandes (4) imprégnées de résine durcissable, orientées dans le sens périphérique de la préforme.

3. Préforme selon la revendication 2, caractérisée en ce que l'armature est constituée par l'enroulement d'une pluralité de fibres longues (4) imprégnées de résine durcissable, sur l'enveloppe intérieure (6) revêtue de nappes de fibres longitudinales.

4. Préforme selon la revendication 1, caractérisée en ce qu'elle comporte une enveloppe extérieure (7) souple et étanche, l'armature étant confinée entre les deux enveloppes (6,7).,

5. Préforme selon la revendication 4, caractérisée en ce que l'armature est constituée par un enroulement de la première enveloppe (6) sur une épaisseur égale à celle séparant les deux enveloppes (6,7), d'une pluralité de nappes de fibres longues imprégnées de résine durcissable.

6. Préforme selon la revendication 5, caractérisée en ce que lesdites nappes sont tressées ou tissées en forme de gaine tubulaire.

7. Préforme selon l'une des revendications 1 à 4, caractérisée en ce que l'armature comporte une pluralité de manches (3) concentriques, placées les unes dans les autres, chacune des manches ayant sous charge une dimension périphérique déterminée légèrement plus grande que la dimension de la manche qu'elle entoure ou légèrement plus petite que la dimension de la manche qui l'entoure, de façon à former une structure serrée.

8. Préforme selon la revendication 7, caractérisée en ce que lesdites manches comportent des enroulements filamentaires circonférentiels (4) tramés par des filaments longitudinaux (5).

9. Préforme selon l'une des revendications précédentes, caractérisée en ce qu'elle comporte, entre l'enveloppe intérieure et l'armature, une nappe de fibres (5) longitudinales.

10. Préforme selon l'une des revendications précédentes, caractérisée en ce que certaines au moins des fibres sont constituées par des fils métalliques.

11. Préforme selon la revendication 1, caractérisée en ce que l'armature est constituée par l'enroulement hélicoïdal d'une bande de fibres qui comporte un bord longitudinal de longueur plus importante que l'autre, la largeur de la bande étant telle que chaque enroulement s'étend de la surface intérieure à la surface extérieure de l'armature.

12. Préforme selon l'une des revendications précédentes, caractérisée en ce que, dans son état replié, elle possède des bords longitudinaux formant un repli en épingle à cheveux, autour d'un volume incompressible (8,9) limitant le rayon de courbure de pliage.

13. Préforme selon la revendication 11, caractérisée en ce que chaque volume incompressible est constitué par une canalisation (11,12).

14. Préforme selon la revendication 1, caractérisée en ce que l'épaisseur de l'armature est supérieure à 5/10ème de millimètre.

15. Préforme selon la revendication 12, caractérisée en ce que la préforme est, dans son état replié, en forme de fer-à-cheval, les deux épingles-à-cheveux étant adjacentes l'une de l'autre, de sorte que la plus grande dimension transversale de la préforme ainsi repliée est substantiellement inférieure au diamètre intérieur de la préforme dans son état déplié.

16. Préforme selon la revendication 15, caractérisée en ce qu'elle comporte une pluralité de sangles périphériques (30) de son maintien à l'état replié, régulièrement répartie sur toute sa longueur et de résistance à la rupture calculée de manière à céder successivement sous l'effet de la progression vers le haut de la pression de remplissage.

17. Préforme selon la revendication 15, caractérisée en ce que l'espace intérieur de ce fer à cheval, constitue un logement pour un boudin (13) de matériau destiné à réaliser l'étanchéité entre la paroi du tube issu de la préforme dans son état cylindrique rigide et la paroi d'un forage à tuber par ce tube.

18. Préforme selon la revendication 17, caractérisée en ce que la préforme et le matériau d'étanchéité sont contenus dans une enveloppe (14) frangible ou élastique.

19. Préforme selon la revendication 1, caractérisée en ce qu'elle comprend une paroi de fond souple (20) raccordée de manière étanche à une extrémité de la paroi tubulaire et, à l'opposé, une seconde paroi de fond souple (19) traversée par un conduit (21) de remplissage de la section tubulaire, relié à une source de fluide pour la faire passer dans un état cylindrique, à partir d'un état replié.

20. Préforme selon la revendication 19, caractérisée en ce que l'extrémité (3a) de la préforme opposée à celle traversée par le conduit de remplissage est, à l'état cylindrique, de diamètre intérieur égal au diamètre extérieur de son autre extrémité, sur des portions de longueur sensiblement égales.

21. Préforme selon la revendication 19, caractérisée en ce que le conduit de remplissage (21) se prolonge à l'intérieur de la préforme jusqu'au voisinage de la paroi de fond (20) opposée.

22. Préforme selon la revendication 21, caractérisée en ce que ce conduit (21) comporte deux dérivations (11,12), s'étendant en parallèle l'une de l'autre dans chacun des volumes limitant le rayon de courbure du pliage susdit, leur paroi étant reliée au moins partiellement à la paroi de fond de la préforme de manière à en constituer l'extracteur après rigidification de la préforme et prise du matériau d'étanchéité.

23. Préforme selon la revendication 1, caractérisée en ce que la préforme est, dans son état replié, en forme de bande plate.

24. Préforme selon la revendication 19, caractérisée en ce que la préforme comporte au moins une conduite de circulation, s'étendant axialement dans la préforme et traversant de manière étanche ses deux extrémités fermées.

25. Préforme selon la revendication 24, caractérisée en ce que le conduit de remplissage est constitué par une dérivation de la conduite de circulation, raccordée à cette dernière par une chemise de dérivation située au voisinage de la préforme.

26. Préforme selon la revendication 19, caractérisé en ce que la préforme comporte un diaphragme (63) divisant son volume intérieur en deux volumes superposés (64,65), l'un d'eux (65) étant de faible longueur par rapport à l'autre.

27. Préforme selon la revendication 26, caractérisé en ce que le volume (64) de plus grande longueur possède, à son extrémité opposée à l'autre volume (65), une portion de longueur au moins égale à celle de cet autre volume et de diamètre intérieur sensiblement égal au diamètre extérieur de cet autre volume lorsque ceux-ci sont dans leur second état.

28. Préforme selon la revendication 26, caractérisé en ce que chacun des volumes (64, 65) est équipé de moyens indépendants (66,67) de liaison à une source de fluide sous pression.

29. Préforme selon la revendication 26, caractérisé en ce que les extrémités (55,75) et le diaphragme (63) sont frangibles au-delà d'un seuil de pression.

30. Préforme selon la revendication 24, caractérisé en ce que la conduite (57) de circulation comporte un clapet unidirectionnel (72) interdisant le retour du fluide en direction de la source, ce clapet étant réalisé à base de matériaux forables.

31. Préforme selon la revendication 24, caractérisé en ce que la conduite de circulation comporte une zone (74) de déconnexion située à l'intérieur de la section de tubage souple et proche de l'une de ses extrémités (56).

32. Procédé pour tuber un puits de forage à l'aide d'une préforme selon une des revendications 1-31, fermée à ses deux extrémités et comportant une conduite de remplissage traversant de manière étanche son extrémité supérieure, caractérisé en ce qu'il comprend les étapes suivantes :
(a) forer une portion de puits,
(b) descendre la préforme replié,
(c) remplir la préforme avec un fluide pour former un tube rigide de diamètre inextensible,
(d) remonter le conduit de remplissage.

33. Procédé pour tuber un puits de forage selon la revendication 32, caractérisé en ce que la préforme comporte une conduite de circulation, s'étendant axialement dans la préforme et traversant de manière étanche ses extrémités fermées permettant de faire circuler un liquide de scellement dans l'espace annulaire entre la préforme replié et la paroi du trou foré après la descente de la préforme.

34. Procédé pour tuber un puits de forage selon la revendications 32, caractérisé en ce que la descente de la préforme repliée est réalisé de sorte que sa partie supérieure reste logée dans le tronçon de tubage précédemment installé.

35. Procédé pour tuber un puits de forage selon les revendications 33 et 34 et à l'aide de la préforme selon la revendication 27, caractérisé en ce que les volumes sont rempli successivement en commencent par le volume (64) de plus grande longueur.

## Patentansprüche

1. Radial verformbarer röhrenförmiger Vorformling in einem längsgerichteten, deutlich zylindrischen Zustand mit einem elastischen (6), undurchlässigen Innenmantel und einer Bewehrung auf der Aussenseite dieses Innenmantels, die dadurch gekennzeichnet ist, dass diese Bewehrung in mehr als einer Wicklung eine Vielzahl von Fasern, Einsätzen und Streifen (3,4) enthält, die durch den Kontakt mit den nebeneinander liegenden Fasern, Einsätzen oder Streifen gemeinsam wirken, wobei diese nebeneinander liegenden Fasern, Einsätze oder Streifen sich auf diese Weise in jedem anderen als dem längsgerichteten Zustand des Vorformlings gegeneinander verschieben können oder unter innerem Druck gegenseitig aufgrund der zwischen ihnen durch einen Windeneffekt entstehenden Reibung immobilisiert werden und so in situ die Bewehrung eines festen Rohrstücks mit unveränderlichem Durchmesser aufweist.

2. Vorfomling gemäss Patentanspruch 1 dadurch gekennzeichnet, dass die Bewehrung mit härtbarem Harz imprägnierte Fasern oder Streifen (4) enthält, die in peripherer Richtung des Vorformlings ausgerichtet sind.

3. Vorfomling gemäss Patentanspruch 2 dadurch gekennzeichnet, dass sich die Bewehrung aus einer Wicklung mehrerer langer Fasern (4) auf dem mit Längsfasern ausgekleideten Innenmantel (6) zusammensetzt, die mit härtbarem Harz imprägniert sind.

4. Vorformling gemäss Patentanspruch 1, der dadurch gekennzeichnet ist, dass er mit einer biegsamen und undurchlässigen Aussenhülle (7) versehen ist, wobei die Bewehrung von den beiden Mänteln (6, 7) umgeben ist.

5. Vorformling gemäss Patentanspruch 4, durch eine Bewehrung so gekennzeichnet, dass durch eine Wicklung des ersten Mantels (6) eine Dicke hergestellt wird, die derjenigen entspricht, die die beiden Mäntel (6,7) mit mehreren mit härtendem Harz imprägnierten Längsfaserschichten versehenen Mäntel trennt.

6. Vorformling gemäss Patentanspruch 5, der dadurch gekennzeichnet ist, dass die genannten Schichten in Form einer röhrenförmigen Ummantelung verflochten oder gewoben sind.

7. Vorformling gemäss Patentanspruch 1 bis 4 dadurch gekennzeichnet, dass sich in der Bewehrung eine Vielzahl von konzentrischen, aufeinanderliegenden Mänteln (3) befindet, wobei jeder Mantel einer Belastung durch eine periphere Dehnung ausgesetzt ist, die etwas grösser oder kleiner als die Dehnung des Mantels ist, der ihn umgibt, so dass eine straffe Struktur entsteht.

8. Vorformling gemäss Patentanspruch 7 dadurch gekennzeichnet, dass die genannten Mäntel kreisförmige Filamentwicklungen (4) enthalten, in die Längsfilamente (5) eingearbeitet sind.

9. Vorformling gemäss einem der obigen Patentansprüche dadurch gekennzeichnet, dass sich zwischen Innenhülle und Bewehrung ein Längsfaserngeflecht (5) befindet.

10. Vorformling gemäss einem der oben genannten Patentansprüche dadurch gekennzeichnet, dass mindestens einige der Fasern aus Draht sind.

11. Vorfomling gemäss Patentanspruch 1 dadurch gekennzeichnet, dass die Bewehrung aus der spiralenförmigen Wicklung eines Faserbandes besteht, das einen Längsrand hat, der länger ist als der andere, wobei die Breite des Bandes derart ist, dass jede Wicklung von der Innenfläche zur Aussenfläche der Bewehrung reicht.

12. Vorformling gemäss einem der oben genannten Patentansprüche dadurch gekennzeichnet, dass er im gefalteten Zustand Längsränder besitzt, die eine Faltung in Haarnadelform rund um ein nicht zusammendrückbares Volumen (8,9) auf eine Weise bildet, dass dern Biegungsradius der Faltung begrenzt ist.

13. Vorformling gemäss Patentanspruch 11 dadurch gekennzeichnet, dass jedes nicht zusammendrückbare Volumen aus einer Röhrenleitung besteht.

14. Vorformling gemäss Patentanspruch 1 dadurch gekennzeichnet, dass die Dicke der Bewehrung mehr als 5/10 Millimeter beträgt.

15. Vorformling gemäss Patentanspruch 12 dadurch gekennzeichnet, dass der Vorformling im gefalteten Zustand eine Hufeisenform bildet, wobei die beiden Haarnadelfaltungen nebeneinanderliegen, so dass die grössere Querseite des so gefalteten Vorformlings deutlich kürzer als der Innendurchmesser des Vorformlings in entfaltetem Zustand ist.

16. Vorformling gemäss Patentanspruch 15 dadurch gekennzeichnet, dass er mit einer Vielzahl von Aussengurten (30) zur Beibehaltung des gefalteten Zustandes versehen ist, die in gleichmässigen Abständen auf der ganzen Länge verteilt sind und deren Reisswiderstand so berechnet ist, dass die Gurte nacheinander unter der Einwirkung des aufsteigenden Fülldrucks nachgeben.

17. Vorformling gemäss Patentanspruch 15 dadurch gekennzeichnet, dass der Innenraum dieser Hufeisenform ein Volumen für einen Wulst (13) aus einem Material für die Isolierung zwischen der Rohrwand des Vorformlings in seinem festen zylindrischen Zustand und der Wand für eine Luber-Bohrung durch dieses Rohr vorsieht.

18. Vorformling gemäss Patentanspruch 17 dadurch charakterisiert, dass der Vorformling und das Isoliermaterial in einer gefaserten oder elastischen Hülle (14) befinden.

19. Vorformling gemäss Patentanspruch 1 dadurch gekennzeichnet, dass er ein biegsames Ende (20) aufweist, das auf feuchtigkeitsisolierte Weise mit einem Ende der Röhrenwand verbunden ist und auf der entgegengesetzten Seite mit einem biegsamen Ende (19), durch das ein Füllrohr (21) für den röhrenförmigen Bereich führt, das mit einer Flüssigkeitsquelle zur Herstellung des zylindrischen Zustands ausgehend vom gefalteten Zustand verbunden ist.

20. Vorformling gemäss Patentanspruch 19 dadurch gekennzeichnet, dass das Ende des Vorformlings (3a), das dem Ende gegenüberliegt, durch das die Füllröhre führt, dessen Länge des Innendurchmessers im zylindrischen Zustand in etwa dem Aussendurchmesser des anderen Endes entspricht.

21. Vorformling gemäss Patentanspruch 19 dadurch gekennzeichnet, dass die Füllröhre (21) im Inneren des Vorformlings bis in die Nähe des gegenüberliegenden Endes (20) reicht.

22. Vorformling gemäss Patentanspruch 21 dadurch gekennzeichnet, dass diese Röhre (21) zwei Abzweigungen (11, 12) aufweist, die je parallel in den Volumina liegen, die den Biegungsradius der oben beschriebenen Faltung begrenzen, wobei ihre Wand wenigstens teilweise mit dem Aussenende des Vorformlings verbunden ist und zwar so, dass sie nach Versteifung des Vorformlings und Aufnahme des Isoliermaterials einen Extraktor darstellt.

23. Vorformling gemäss Patentanspruch 1 dadurch gekennzeichnet, dass der Vorformling im gefalteten Zusstand ein flaches Band darstellt.

24. Vorformling gemäss Patentanspruch 19 dadurch gekennzeichnet, dass der Vorformling ein Leitungsrohr darstellt, das sich axial im Vorformling befindet und feuchtigkeitsisoliert die beiden geschlossenen Enden durchdringt.

25. Vorformling gemäss Patentanspruch 24 dadurch gekennzeichnet, dass die Füllröhre aus der Abzweigung des Leitungsrohres besteht, das mit ihr durchn ein Abzweigungsrohr verbunden ist, das sich in der Nähe des Vorformlings befindet.

26. Vorformling gemäss Patentanspruch 19 dadurch gekennzeichnet, dass der Vorformling eine Membrane (63) besitzt, die das Innenvolumen in zwei übereinanderliegende Volumina (64, 65) unterteilt, von denen eines kürzer als das andere ist.

27. Vorformling gemäss Patentanspruch 26 dadurch gekennzeichnet, dass das längere Volumen (64) an dem Ende, das dem anderen Volumen (65) gegenüberliegt, einen wenigstens gleichlangen Teil wie der des anderen Volumens mit einem Innendurchmesser bildet, der in etwa so gross ist wie der Aussendurchmesser dieses anderen Volumens, wenn beide im zweiten Zustand sind.

28. Vorformling gemäss Patentanspruch 26 dadurch gekennzeichnet, dass jedes Volumen (64, 65) mit voneinander unabhängigen Mitteln (66, 67) zur Verbindung mit einer Flüssigkeitsquelle unter Druck ausgestattet ist.

29. Vorformling gemäss Patentanspruch 26 dadurch gekennzeichnet, dass die Aussenenden (55, 57) und die Membrane (63) jenseits eines gewissen Druckpegels brechen.

30. Vorformling gemäss Patentanspruch 24 dadurch gekennzeichnet, dass sich im Leitungsrohr (57) ein Rückschlagventil (72) befindet, das den Rückfluss der Flüssigkeit in Richtung der Quelle verhindert, wobei dieses Ventil aus bohrbarem Material hergestellt ist.

31. Vorformling gemäss Patentanspruch 24 dadurch gekennzeichnet, dass das Leitungsrohr einen Abschaltungsbereich (74) enthält, der innerhalb des flexiblen Rohrbereichs bei einem der Aussenenden (56) liegt.

32. Verfahren zur Verrohrung eines Bohrlochs mit Hilfe eines Vorformlings gemäss Patentanspruch 1 - 31, der an beiden Enden geschlossen ist und ein Füllrohr besitzt, das feuchtigkeitsisoliert das obere Ende durchstösst und dadurch gekennzeichnet ist, dass es aus folgenden Schritten besteht :
(a) Bohrung eines Teils des Loches
(b) Einführung des gefalteten Vorformlings
(c) Füllen des Vorformlings mit einer Flüssigkeit zur Herstellung eines festen Rohres mit nicht ausdehnbarem Durchmesser
(d) Einziehen des Füllrohrs

33. Verfahren zur Verrohrung eines Bohrlochs gemäss Patentanspruch 32 dadurch gekennzeichnet, dass der Vorformling axial ein Leitungsrohr enthält, das feuchtigkeitsisoliert die geschlossenen Enden durchstösst und so das Fliessen einer Flüssigkeit zur Versiegelung im ringförmigen Volumen zwischen dem gefalteten Vorformling und der Wand des Bohrlochs nach dem Einführen des Vorformlings ermöglicht.

34. Verfahren zur Verrohrung eines Borlochs gemäss Patenanspruch 32 dadurch gekennzeichnet, dass das Einführen des gefalteten Vorformlings so durchgeführt wird, dass sein oberer Teil in dem vorher hergestellten Rohrabschnitt verbleibt.

35. Verfahren zur Verrohrung eines Bohrlochs gemäss Patentansprüchen 33 und 34 mit Hilfe des Vorformlings gemäss Patentanspruch 27 und dadurch gekennzeichnet, dass die Volumina nacheinander ausgehend von dem längsten Volumen (64) gefüllt werden.

## Claims

1. A tubular preform that is radially deformable between a longitudinally folded state in the longitudinal direction and a substantially cylindrical unfolded state comprising a flexible and watertight inner envelope (6), and, formed on the outside of said inner envelope, reinforcement made of a structure comprising a plurality of fibers, sleeves or strips (3, 4) extending over more than one turn and co-operating with adjacent fibers, sleeves or strips, the fibers, sleeves or strips making can slide over one another while the preform is in any state other than its unfolded state where, under internal pressure, they are locked together by the friction between them due to a capstan effect to form in-situ the reinforcement of a rigid pipe of inextensible diameter.

2. A preform according to claim 1, wherein the structure is constituted by winding a plurality of long fibers, sleeves or strips (4) impregnated with settable resin in the peripheral direction of the preform.

3. A preform according to claim 2, wherein the structure is constituted by winding a plurality of long fibers (4) impregnated with settable resin onto the inner envelope (6) covered with bands of longitudinal fibers.

4. A preform according to claim 1, wherein there is a external outer envelope (7) flexible and watertight, the structure being located between the two envelopes (6, 7).

5. A preform according to claim 4, wherein the structure is constituted by winding onto the inner envelope (6) a thickness equal to the one separating the two envelopes (6, 7), of plurality of bands of long fibers impregnated with settable resin.

6. A preform according to claim 5, wherein said bands are braided or woven in a sleeve shape.

7. A preform according to claim 1 through 4, wherein said structure includes a plurality of concentric sleeves (3) placed one within another, each of the sleeves when under load having a peripheral size that is designed to be slightly smaller than the size of the sleeve which surrounds it thereby forming a compact structure.

8. A preform according to claim 7, wherein the said sleeves comprise circonferential winded fibers (4) woven by longitudinal fibers (5).

9. A preform according to one of the previous claims, wherein it includes, between the inner envelope and the structure, a sheet of longitudinal fibers (5).

10. A preform according to one of the previous claims, wherein some of the fibers are made of metal wires.

11. A preform according to claim 1, wherein the structure is made of a band of fibers helically wound having two longitudinal edges, one of which being longer that the other, the width of the bands being such that each layer extends from the inner envelop to the outer envelop of the structure.

12. A preform according to one of the previous claims, wherein in its folded state, it has longitudinal edges forming a fold in hairpin curve, around an incompressible volume (8, 9) limiting the folding radius.

13. A preform according to claim 11, wherein each incompressible volume is a duct (11, 12).

14. A preform according to claim 1, wherein the thickness of the structure exceed 5/10 of millimeter.

15. A preform according to claim 12, wherein the preform, in folded state a horseshoe shape, the two hairpin bends being adjacent each other, such that the largest transverse dimension of the preform folded in this way is substantially less than the inside diameter of the preform in its unfolded state.

16. A preform according to claim 15, wherein it includes a plurality of peripheral straps for holding it in the folded state and uniformly distributed along its length, the breaking strength thereof being designed so that

17. A preform according to claim 15, wherein the inside of the horseshoe shape constitutes a housing for a sausage (13) of material to be used in sealing the wall of the tube as provided by the preform when in its rigid cylindrical state to the wall of the borehole to be cased by said tube.

18. A preform according to claim 17, wherein the preform and the sealing material are contained in an envelope that is breakable or elastic.

19. A preform according to claim 1, wherein it includes a flexible end wall (20) connected in sealed manner to one end of the tubular wall and at the opposed end, a second flexible end wall (19) with a filler duct (21) passing therethrough, connected to a source of fluid to pass to a cylindrical state from a folded state.

20. A preform according to claim 19, wherein the end (3a) of the preform opposed from the end through which the filler duct passes, has, in the cylindrical state, an inside diameter equal to the outside diameter of its opposite end, and over portions of substantially equal length.

21. A preform according to claim 19, wherein the filler duct (21) extends inside the preform to the vicinity of the opposite end wall (20).

22. A preform according to claim 21, wherein the said duct (21) comprise two branches (11, 12) which extend in parallel to each other in each of the volumes limiting the above-mentioned folding radius of curvature, their walls being connected at least partially to the bottom end wall of the preform so as to constitute an extractor therefore after the preform has become rigid and the sealant has set.

23. A preform according to claim 1, wherein the preform when in its folded state is in the form of a flat strip.

24. A preform according to claim 19, wherein said preform includes at least one circulation duct extending axially inside the preform and passing in sealed nannner through its closed ends.

25. A preform according to claim 24, wherein the filling duct is constituted by a branch on the circulation duct, connected thereto via a sliding sleeve located close to the preform.

26. A preform according to claim 19, wherein the preform includes a diaphragm (63) dividing its inside volume is two super-posed volumes (64, 65), one of which (65) being of a short length relative to the other.

27. A preform according to claim 26, wherein the longer volume (64) possesses at its end furthest from the other volume (65), a portion whose length is not less than the length of said other volume and of inside diameter substantially equal to the outside diameter of said other volume when said volumes are in their second state.

28. A preform according to claim 26, wherein each of the volumes (64, 65) is fitted with independent means (66, 67) for connection to a source of fluid under pressure.

29. A preform according to claim 26, wherein the ends (55, 75) and the diaphragm (63) are breakable beyond a pres-sure threshold.

30. A preform according to claim 24, wherein said circulation duct (57) includes a non-return valve (72) preventing fluid from returning towards the source, the non-return valve being made of drillable materials.

31. A preform according to claim 24, wherein the circulation duct includes a disconnection zone (74) situated inside the section of flexible casing and close to one of its ends (56).

32. A method of casing a borehole using a preform, according to one claims between 1 and 31, closed at both ends and including at least one filling duct extending axially inside said preform and passing in sealed manner through its upper ends wherein the method comprises the following steps:
(a) drilling a portion of borehole;
(b) lowering a folded section of preform;
(c) filling the preform with a fluid to create a rigid pipe of inextensible diameter;
(d) pulling the filling duct out of the hole.

33. A method of casing a borehole according to claim 32, wherein the preform includes a circulation duct, extending axially inside the preform and passing in sealed nannner through its closed ends allowing circulation of a cementing fluid in the annulus space between the preform and the drilled borehole after lowering of the preform.

34. A method of casing a borehole according to claim 32, wherein the lowering of the folded preform is done in order that the upper portion is housed in the previously installed casing.

35. A method of casing a borehole according to the claims 33 and 34 and according to preform of the claim 27, wherein the volumes are successively filled starting by the volume (64) of greater length.
